# FASCICULE DE BREVET EUROPEEN

(11) **EP 0 573 351 B1**
(45) Date de publication et mention de la délivrance du brevet: **30.08.1995**
(21) Numéro de dépôt: 93401403.6
(22) Date de dépôt: 02.06.1993
(51) Int. Cl.: B61D 17/04

(54) **Caisse de véhicule ferroviaire en acier inoxydable**
Wagenkasten aus rostfreiem Stahl für Schienenfahrzeug
Stainless steel body for railway carriage

(30) Priorité: 03.06.1992 FR 9206734
(43) Date de publication de la demande: 08.12.1993
(73) Titulaire: GEC ALSTHOM TRANSPORT SA, 75116 Paris (FR)
(72) Inventeur: Tieberghien, Philippe, F-59390 Lys lez Lannoy (FR); Ramez, Fernand, F-59269 Artres (FR); Lhommet, Max, F-59590 Raismes (FR); Berquet, Michel, F-59770 Marly (FR)
(74) Mandataire: Fournier, Michel

(56) Documents cités:
- DE-A- 2 031 546
- US-A- 2 620 750
- US-A- 2 815 722
- US-A- 2 870 723

## Description

La présente invention concerne une caisse de véhicule ferroviaire comprenant des éléments constitués d'acier inoxydable.

On connaît déjà des caisses de véhicule ferroviaire réalisées en acier inoxydable et constituées de tôles d'acier inoxydable soudées sur une structure résistante. L'acier inoxydable non peint présente la propriété d'être facilement nettoyable, ce qui est un avantage certain dans l'entretien des trains de banlieue qui font très souvent l'objet de graffiti.

Pour des raisons d'esthétique et vue la forte déformation due à la chaleur, il faut prendre certaines précautions pour la soudure des tôles minces d'acier inoxydable sur la structure résistante de la caisse. Les tôles sont alors fixées sur la structure résistante par la méthode de soudure par points résistifs. On procède de la manière suivante. Les tôles sont posées sur la structure résistante en recouvrant les longerons du châssis et les battants de pavillon et sont accrochées à la structure par soudure par points. Un mastic électroplastique a été intercalé entre les parties à souder, là où une étanchéité est nécessaire.

Dans le cas du soudage de tôles planes, vu le manque d'inertie de celles-ci pour assurer la planéité et les faire participer à la résistance de la caisse, les tôles sont fixées à la structure résistante en les ayant au préalable chauffées et tendues.

Les soudures par points résistifs, si elles sont satisfaisantes pour l'esthétique d'un véhicule en acier inoxydable non peint, sont cependant insuffisantes sur les structures résistantes de la caisse (longerons, battants de pavillon, montants de portes) pour garantir l'intégrité de l'espace voyageur lors d'éventuelles collisions. En outre, l'évolution du désign faces lisses, les objectifs toujours plus contraignants de gain de masse, de productivité et de facilité de fabrication en vue d'exporter la technique sont imposées par l'évolution du marché.

Ces données conduisent à utiliser des tôles d'habillage des faces lisses les plus minces possibles et à les fixer sur la structure par points associés à des cordons de soudure (fortement énergétique) pour faire participer les tôles à la résistance de la caisse. Dans ces conditions, avec le type de véhicule ferroviaire selon l'art connu et décrit plus haut, il deviendrait nécessaire de recourir à des opérations de planage des tôles (par martelage par exemple) qui laissent des traces très visibles. Cette opération est difficile vu l'esthétique des tôles non peintes.

L'invention permet de résoudre ce problème par l'utilisation de profils épais en acier inoxydable pour réaliser les longerons de châssis, les battants du pavillon ainsi que les ossatures des faces latérales assemblées par soudure avec apport de métal assurant la résistance de la structure (soudure MIG par exemple), l'habillage des faces latérales étant obtenu par des tôles en acier inoxydable, minces et lisses, de surface la plus restreinte possible en vue de limiter les déformations des tôles dues aux soudures d'étanchéité.

Ceci est possible si les profils épais sont apparents de manière à constituer une partie non négligeable de la surface métallique visible.

L'invention a donc pour objet une caisse de véhicule ferroviaire en acier inoxydable, caractérisée en ce que :
- les longerons de châssis et les battants de pavillon sont en acier inoxydable, sont constitués de profils continus sur toute la longueur de la caisse et sont apparents,
- l'habillage des faces latérales comprend des tôles, en acier inoxydable, lisses et de faible épaisseur par rapport à l'épaisseur desdits profils, les tôles étant fixées par soudure continue étanche sur les bords des longerons et des battants de pavillon de manière que la surface de ces tôles soit réduite le plus possible.

Les faces latérales peuvent avantageusement se trouver en retrait par rapport aux longerons de châssis et aux battants de pavillon. Ceci permet de faciliter et de limiter les soudures qui se font hors du rayon de formage des profils.

La caisse peut être avantageusement dépourvue de tôle d'habillage entre baies vitrées et longerons et entre baies vitrées et battants de pavillon. Ceci permet de minimiser la surface des tôles d'habillage et de limiter les soudures d'étanchéité.

Les profils des ossatures des faces latérales formant des noeuds d'assemblage, ces profils peuvent être emboutis et découpés au niveau des noeuds d'assemblage pour obtenir une surface plane commune pour ces profils. Ceci permet de limiter le meulage des soudures côté tôles d'habillage et de supprimer les usinages d'accostage des profils en évitant les réglages au montage.

Les profils des longerons, de battants de pavillon, d'ossatures de faces latérales et de châssis sont avantageusement assemblés par cordon de soudure avec apport de métal. Ce type de soudure procure plus de résistance à la structure en cas de collision.

Les tôles d'habillage sont solidarisées par points résistants (les moins énergétiques pour minimiser les déformations), des soudures discontinues par clins avec apport de métal autour des baies et des portes, des soudures continues étanches entre tôles et longerons, tôles et battants de pavillon assurant une liaison résistante.

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1 représente une caisse d'un véhicule ferroviaire à deux niveaux selon l'invention,
- la figure 2 est une vue partielle de la caisse de la figure 1 illustrant la fixation des tôles sur une face latérale,
- la figure 3 est une vue de détail de la structure résistante de la caisse de véhicule ferroviaire selon l'invention,
- la figure 4 est une vue selon la coupe IV-IV de la figure 3,
- la figure 5 représente un noeud d'assemblage de profils de face latérale,
- la figure 6 représente un élément de tôle renforcé par un profil cannelé,
- la figure 7 montre un détail du montage d'une baie vitrée.

La description portera sur le cas d'un véhicule ferroviaire à deux niveaux mais l'invention s'applique également au cas d'un véhicule à un seul niveau.

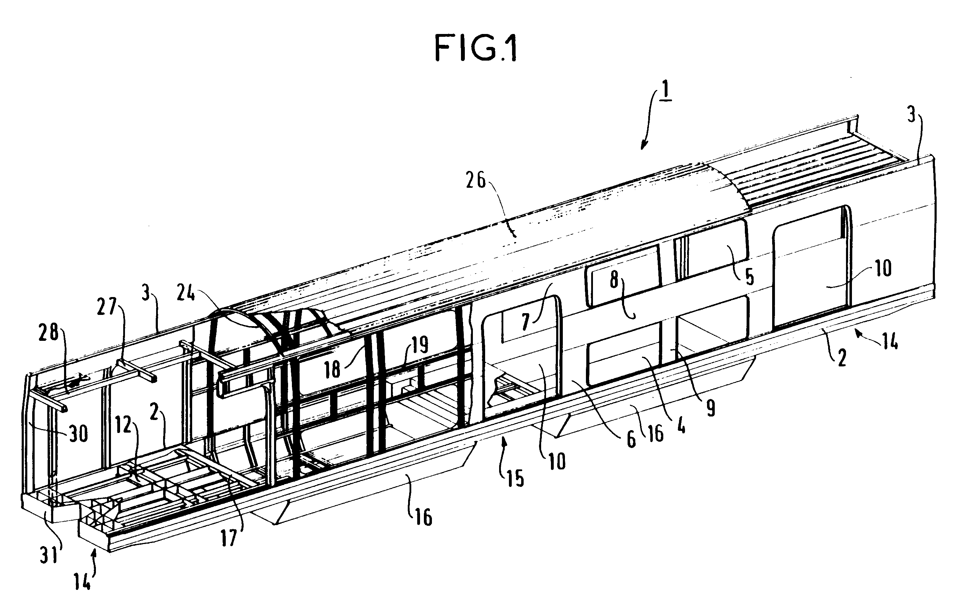

La figure 1 illustre une caisse 1 de véhicule ferroviaire à deux niveaux. C'est une vue en perspective avec arrachement partiel de l'habillage montrant la structure du véhicule. La caisse est constituée d'une structure en profils de forte épaisseur (3 à 5 mm) assemblée par soudage MIG (Metal Inert Gas) assurant la résistance de la structure. Les tôles d'habillage des faces sont solidarisées sur la structure par soudage par points résistants (qui sont peu énergétiques et induisent donc peu de déformations) ou par le procédé TIG points (Tungsten Inert Gas) dans les zones d'accès difficile. Des soudures discontinues par clins MIG, et soudure continue là où une étanchéité est nécessaire, assurent une liaison résistante.

La surface de tôle a été réduite pour laisser apparentes les structures résistantes. Les longerons 2 et les battants de pavillon 3 sont apparents. La surface vitrée a été agrandie par suppression des tôles entre fenêtres inférieures 4 et longerons 2 et entre fenêtres supérieures 5 et battants de pavillon 3. Cette disposition permet un gain de masse et évite au maximum les soudures d'étanchéité continue qui engendrent de fortes déformations à la périphérie des tôles.

Les faces latérales du véhicule comportent des tôles planes telles que celles référencées 6, 7, 8 et 9. Entre les portes d'accès 10, la surface de tôle est limitée entre fenêtres supérieures 5 et fenêtres inférieures 4 et au niveau des trumeaux. Les tôles sont solidarisées par points résistants et soudures discontinues par clins MIG sur la structure réalisée en profils pliés ou galetés de forte épaisseur assemblés par soudure MIG.

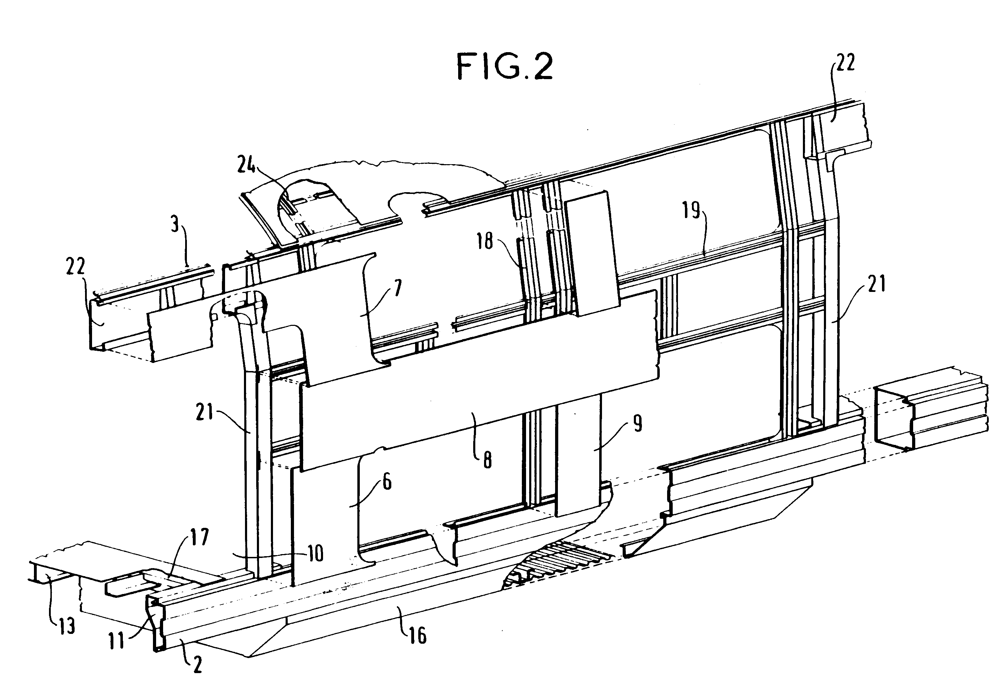

Chaque longeron 2 est avantageusement réalisé en une seule pièce faisant toute la longueur de la caisse, ce qui apporte une bonne résistance aux efforts. Le châssis se compose d'éléments en profils : brancards 11, traverses 12 et longrines 13 (voir les figures 1 et 2), assemblés par soudure MIG.

Afin d'optimiser la fabrication et d'obtenir des sous-ensembles homogènes avant assemblage final, le châssis est réalisé à partir de sept modules dans l'exemple de véhicule décrit ici. Les deux extrémités 14 du châssis peuvent être réalisées en acier à haute limite élastique. La plate-forme centrale 15, les deux baignoires 16 et les deux longerons 2 sont en acier inoxydable.

L'assemblage final du châssis est réalisé par l'intermédiaire de cornières 17 disposées transversalement. Ces cornières permettent de faciliter le réglage longitudinal et vertical du châssis. L'ensemble constitué par les extrémités 14, la plate-forme centrale 15 et les deux baignoires 16 est ensuite encadré par les longerons 2 dont la continuité sur la longueur du véhicule permet une meilleure rigidité en compression et en charge verticale. L'assemblage est obtenu par des goussets et plats de liaison.

L'ossature des faces latérales est constituée de montants 18 et de traverses 19 de section en forme d'oméga et assemblés entre eux par soudure MIG. Les montants 18 et traverses 19 sont fixés sur les longerons 2 et battants de pavillon 3 également par soudure MIG.

Chaque longeron 2 peut être constitué d'un profil galeté de 4 mm d'épaisseur, doublé intérieurement de larges plats et raidisseurs pour assurer la continuité des traverses de châssis, montants de face latérale et courbes de pavillon de manière à reconstituer une poutre tubulaire.

Les portes sont délimitées par des montants 21 soudés sur les longerons et solidarisés aux battants de pavillon 3 par l'intermédiaire de profils 22. Les angles entre les montants 21 et les profils 22 sont arrondis par des éléments d'angle 23 soudés par soudure MIG et renforçant l'ossature des faces latérales.

L'ossature du pavillon est constituée de profils courbes 24 assemblés aux battants de pavillon 3 par soudure MIG.

Les tôles de pavillon 26 sont par exemple constituées de sept bandes de tôles cannelées soudées entre elles par soudure résistante à la molette et soudées à l'ossature du pavillon par des soudures bi-points, le tôlage du pavillon étant considéré non travaillant.

En extrémités de véhicule, la toiture dégagée est réalisée par une ossature plane constituée de profils transversaux 27 et longitudinaux 28 de forme tubulaire.

Les bouts de caisse, renforcés de montants tubulaires anti-collision 30, prennent appui sur la traverse de tête 31 et sur les battants de pavillon 3.

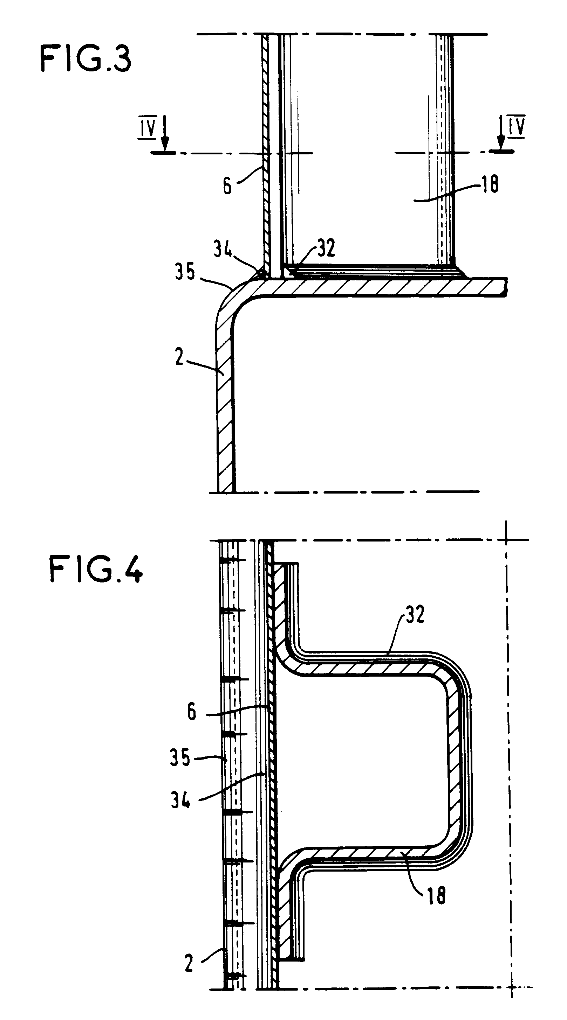

La liaison entre la structure apparente et les tôles des faces latérales est optimisée par un retrait de la structure de la face par rapport au longeron et au battant de pavillon qui restent apparents. Ce retrait peut être de l'ordre de 15 mm. Il permet de limiter la visibilité des soudures longitudinales par le biais du changement de plans. Ce retrait permet de réaliser avantageusement la soudure du montant 18 en dehors du rayon de courbure 35 du longeron et d'éviter les usinages particuliers des montants (voir la figure 3).

Les figures 3 et 4 illustrent le retrait d'une face latérale par rapport à son longeron. Le longeron 2 est représenté vu en coupe transversale sur la figure 3. Les montants 18 sont soudés en retrait sur le longeron 2 par des soudures 32 de type MIG situées côté intérieur du véhicule. La soudure d'une tôle, par exemple celle portant la référence 6 sur les figures 1 et 2, sur le longeron 2 se fait par une soudure MIG continue 34 situés en retrait par rapport au longeron.

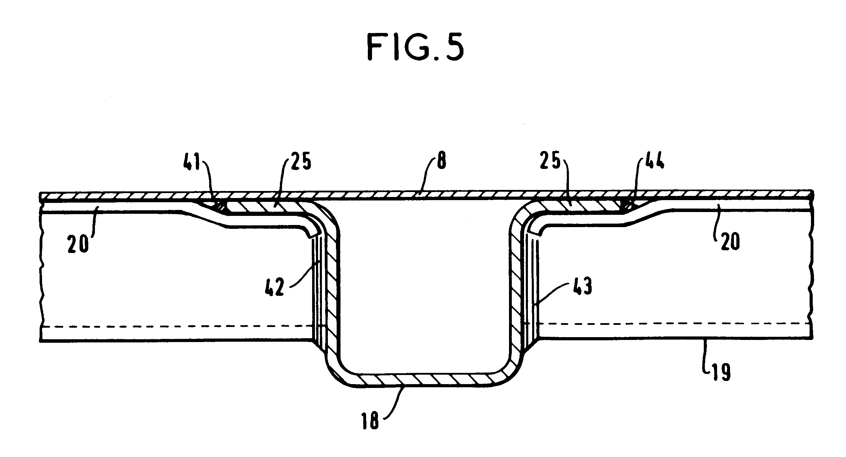

Les profils des ossatures des faces latérales, tels les profils 18 et 19 représentés aux figures 1 et 2 forment, en leur point de rencontre, des noeuds d'assemblage. Ils sont emboutis et découpés au niveau de ces noeuds d'assemblage pour présenter une surface plane commune à ces profils, surface qui sera la surface de pose des tôles. Cette manière de procéder permet aussi de limiter le meulage des soudures côté tôles et de supprimer les usinages d'accostage des profils. Des profils de profondeur différente permettent aux assemblages de déplacer la soudure hors rayon, ce qui limite les déformations, et de supprimer les grugés d'accostage dans les rayons de pliage. Ceci est illustré par la figure 5 qui représente le profil 18 en coupe et le profil 19 vu de-dessus.

Le profil 19 est moins profond que le profil 18. Le profil 19 est interrompu au niveau du noeud d'assemblage. Ses ailes 20 sont embouties à ce niveau et rabattues derrière les ailes 25.

Des soudures MIG 41, 42, 43 et 44 assurent la liaison des deux profils, les soudures se faisant hors rayon. Cette façon de disposer les profils procure une surface plane pour la fixation de la tôle 8 qui peut être fixée à la fois sur le profil 18 et sur le profil 19.

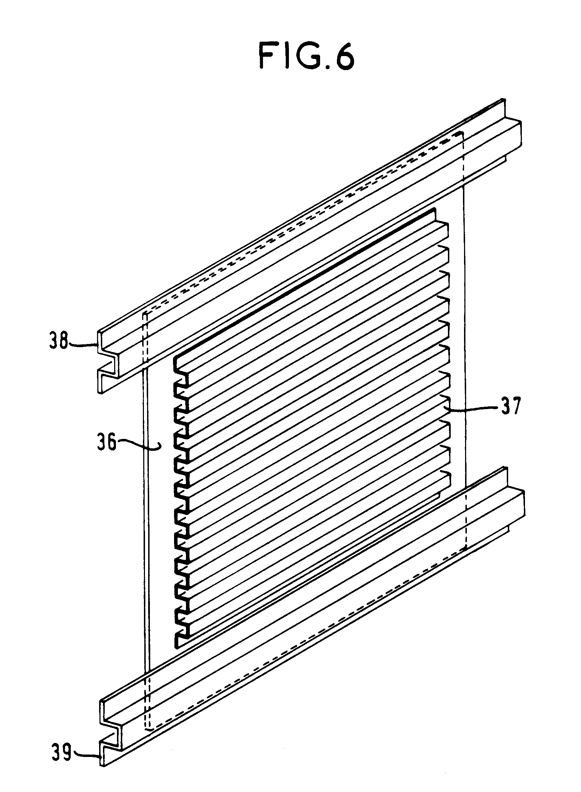

Afin de limiter les déformations des tôles entre les profils de structure et pour obtenir des sous-ensembles de faces et de bouts en tôles, on peut renforcer les éléments de tôles par un profil cannelé servant de raidisseur. Ce profil cannelé en acier inoxydable peut être fixé à la tôle par des soudures résistantes bi-points qui marquent peu la surface visible. La figure 6 montre un élément de tôle 36 renforcé, sur sa face interne au véhicule, par un profil cannelé 37. On a représenté également deux profils 38 et 39 de la structure résistante de la caisse sur lesquels l'élément de tôle 36 est fixé. Le renforment permet de supprimer l'opération de mise en tension des tôles entre baies réalisée sur caisse. En bout de caisse, où la tension des tôles est impossible, l'utilisation de tôles renforcées est impératif.

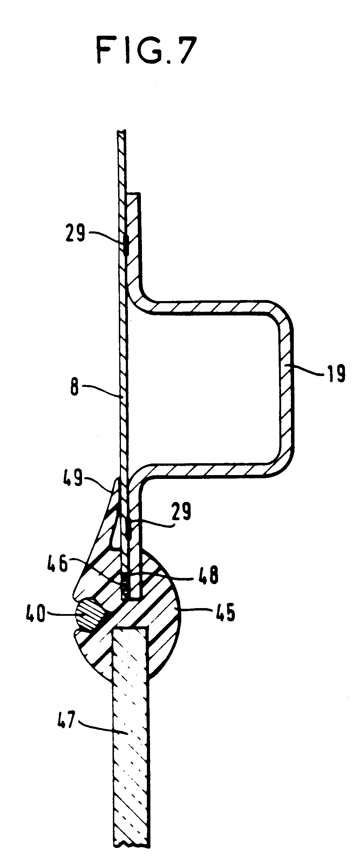

L'étanchéité autour des baies vitrées est assurée grâce aux joints de baies comme cela est illustré par la figure 7 où l'on reconnaît une traverse de face latérale 19 sur laquelle est soudé le bord d'une tôle 8 par des points de soudure 29. Une soudure discontinue 48 par clins MIG est effectuée entre le chant de la tôle 8 et la traverse 19. La vitre 47 de la baie est maintenue sur l'ossature de la face latérale et notamment sur la traverse 19 par un joint de baie 45. Avant la pose de ce joint un cordon 46 de mastic d'étanchéité a été déposé sur la traverse 19 en bordure de la tôle 8, aux endroits dépourvus de soudure 48. Le joint de baie 45 possède une lèvre d'appui 49 reposant sur la tôle 8 et permettant de dissimuler les soudures par points résistants. Une clé de joint 40 insérée dans la matière élastique du joint 45 assure une pression correcte du joint sur la vitre 47 d'une part et sur la traverse 19 et la tôle 8 d'autre part.

La surface de la caisse peut ensuite subir un traitement de surface selon l'art connu pour décaper les soudures et donner un aspect uniforme aux tôles.

## Revendications

1. Caisse de véhicule ferroviaire en acier inoxydable, caractérisée en ce que :
- les longerons (2) de châssis et les battants de pavillon (3) sont en acier inoxydable, sont constitués de profils continus sur toute la longueur de la caisse et sont apparents,
- l'habillage des faces latérales comprend des tôles (6, 7, 8, 9) en acier inoxydable, lisses et de faible épaisseur par rapport à l'épaisseur desdits profils, les tôles étant fixées par soudure continue étanche sur les bords des longerons (2) et des battants de pavillon (3) de manière que la surface de ces tôles soit réduite le plus possible.

2. Caisse selon la revendication 1, caractérisée en ce que les faces latérales se trouvent en retrait par rapport aux longerons de châssis et aux battants de pavillon.

3. Caisse selon l'une des revendications 1 ou 2, caractérisée en ce qu'il n'y a pas de tôle d'habillage entre baies vitrées et longerons et entre baies vitrées et battants de pavillon.

4. Caisse selon l'une des revendication 1 ou 2, caractérisée en ce que, la caisse étant une caisse de véhicule ferroviaire à deux niveaux, il n'y a pas de tôle d'habillage entre baies vitrées de niveau inférieur (4) et longerons (2) et entre baies vitrées de niveau supérieur (5) et battants de pavillon (3).

5. Caisse selon l'une quelconque des revendications 1 à 4, caractérisée en ce que, les profils (18, 19) des ossatures des faces latérales formant des noeuds d'assemblage, ces profils sont emboutis et découpés au niveau de ces noeuds d'assemblage pour obtenir une surface plane commune pour ces profils.

6. Caisse selon l'une quelconque des revendications 1 à 5, caractérisé en ce que le châssis est également constitué de profils.

7. Caisse selon l'une quelconque des revendications 1 à 6, caractérisé en ce que les profils de longerons, de battants de pavillon, d'ossatures de faces latérales et de châssis sont assemblés par cordon de soudure avec apport de métal.

8. Caisse selon l'une quelconque des revendications 1 à 7, caractérisée en ce que les tôles d'habillage des faces latérales sont agrafées par points résistants ou par soudure TIG points dans les zones d'accès difficile et soudées par clins de soudure avec apport de métal ou soudure d'étanchéité continue.

9. Caisse selon l'une quelconque des revendications 1 à 8, caractérisée en ce que les tôles d'habillage (36) sont fixées à un profil cannelé (37) servant de raidisseur.

10. Caisse selon l'une quelconque des revendications 1 à 9, caractérisée en ce que le châssis est composé de plusieurs tronçons (14, 15, 16) depuis l'une des extrémités de la caisse jusqu'à l'autre extrémité.

11. Caisse selon la revendication 10, caractérisée en ce que les tronçons d'extrémité (14) du châssis sont réalisés en acier à haute limite élastique.

12. Caisse selon l'une des revendications 10 ou 11, caractérisée en ce que les tronçons du châssis sont solidarisés entre eux par des profils transversaux au châssis.

13. Caisse selon la revendication 12, caractérisée en ce que les profils de solidarisation du châssis sont des cornières (17).

## Claims

1. A rail vehicle body made of stainless steel, characterized in that:
the length members (2) of the chassis and the roof battens (3) are made of stainless steel, are constituted by section members that are continuous along the entire length of the body, and are visible; and
the covering of the side faces comprises sheets (6, 7, 8, 9) of stainless steel, that are smooth and thin relative to the thickness of said section members, the sheets being fixed by continuous leak-proof welding to the edges of the length members (2) and to the roof battens (3) so that the area of said metal sheets is as small as possible.

2. A body according to claim 1, characterized in that the side faces are set back relative to the chassis length members and to the roof battens.

3. A body according to claim 1 or 2, characterized in that there is no covering sheet metal between the window bays and the length members or between the window bays and the roof battens.

4. A body according to claim 1 or 2, characterized in that the body is the body of a double-decker rail vehicle, and there is no covering metal sheet between the bottom window bays (4) and the length members (2) or between the top window bays (5) and the roof battens (3).

5. A body according to any eon of claims 1 to 4, characterized in that the section members (18, 19) of the frameworks of the side faces form assembly nodes, said section members being stamped and cut out at said assembly nodes so as to obtain a common plane surface for said section members.

6. A body according to any one of claims 1 to 5, characterized in that the chassis is also made up of section members.

7. A body according to any one of claims 1 to 6, characterized in that the section members comprising the length members, the roof battens, the side face frameworks, and the chassis are assembled together by weld fillets that include filler metal.

8. A body according to any one of claims 1 to 7, characterized in that the metal sheets covering the side faces are secured by resistance spot welds or by TIG spot welds in zones that are difficult to access, and they are welded by fillet welds with filler metal or by continuous leak-proofing welds.

9. A body according to any one of claims 1 to 8, characterized in that the covering metal sheets (36) are fixed to corrugated sheet members (37) for stiffening purposes.

10. A body according to any one of claims 1 to 9, characterized in that the chassis is made of a plurality of lengths (14, 15, 16) extending from one of the ends of the body to the other end.

11. A body according to claim 10, characterized in that the end lengths (14) of the chassis are made of high elastic limit steel.

12. A body according to claim 10 or 11, characterized in that the chassis lengths are secured to one another by transverse section members of the chassis.

13. A body according to claim 12, characterized in that the chassis-securing section members are angle members (17).

## Patentansprüche

1. Eisenbahnwaggon aus rostfreiem Stahl, dadurch gekennzeichnet,
- daß die Längsbalken (2) des Chassis und die Dachträger (3) aus rostfreiem Stahl sind und aus über die ganze Länge des Waggons durchlaufenden Profilen bestehen und sichtbar sind,
- daß die Verkleidung der Seitenflächen Bleche (6, 7, 8, 9) aus rostfreiem Stahl enthält, die glatt und dünn im Vergleich zur Dicke der Profile sind, wobei diese Bleche durch kontinuierliche dichte Verschweißung mit den Rändern der Längsbalken (2) und der Dachträger (3) verbunden sind, so daß die Oberfläche dieser Bleche möglichst verringert wird.

2. Waggon nach Anspruch 1, dadurch gekennzeichnet, daß die Seitenflächen bezüglich der Längsbalken des Chassis und der Dachträger rückversetzt sind.

3. Waggon nach einem der Ansprüche 1 oder 2, dadurch gekennzeichnet, daß kein Verkleidungsblech zwischen Fensterfeldern und den Längsbalken und zwischen Fensterfeldern und den Dachträgern vorgesehen ist.

4. Waggon nach einem der Ansprüche 1 oder 2, dadurch gekennzeichnet, daß im Fall eines doppelstöckigen Eisenbahnwaggons kein Verkleidungsblech zwischen verglasten Feldern des unteren Stocks (4) und den Längsbalken (2) sowie zwischen den verglasten Feldern des oberen Stocks (5) und den Dachträgern (3) vorgesehen ist.

5. Waggon nach einem beliebigen der Ansprüche 1 bis 4, dadurch gekennzeichnet, daß die Profile (18, 19) der Versteifung der Seitenflächen Fachwerksknoten bilden und tiefgezogen sowie in Höhe dieser Knoten abgeschnitten sind, um für diese Profile eine gemeinsame ebene Oberfläche zu erhalten.

6. Waggon nach einem beliebigen der Ansprüche 1 bis 5, dadurch gekennzeichnet, daß das Chassis ebenfalls aus Profilen besteht.

7. Waggon nach einem beliebigen der Ansprüche 1 bis 6, dadurch gekennzeichnet, daß die Profile von Längsbalken, Dachträgern, Versteifungen der Seitenflächen und Chassis durch Schweißnähte zusammengebaut sind, bei denen Metall aufgetragen wird.

8. Waggon nach einem beliebigen der Ansprüche 1 bis 7, dadurch gekennzeichnet, daß die Verkleidungsbleche der Seitenflächen durch Widerstands-Schweißpunkte oder TIG-Schweißpunkte in den schwer zugänglichen Zonen angeheftet und mittels diskontinuierlicher Schweißnähte unter Metallauftrag oder eine kontinuierliche dichte Schweißnaht endgültig befestigt sind.

9. Waggon nach einem beliebigen der Ansprüche 1 bis 8, dadurch gekennzeichnet, daß die Verkleidungsbleche (36) an einem gewellten Versteifungs-Profil (37) befestigt sind.

10. Waggon nach einem beliebigen der Ansprüche 1 bis 9, dadurch gekennzeichnet, daß das Chassis aus mehreren Abschnitten (14, 15, 16) von einem Ende des Waggons bis zum anderen Ende zusammengesetzt ist.

11. Waggon nach Anspruch 10, dadurch gekennzeichnet, daß die Endabschnitte (14) des Chassis aus Stahl mit hoher Elastizitätsgrenze gebildet sind.

12. Waggon nach einem der Ansprüche 10 oder 11, dadurch gekennzeichnet, daß die Chassisabschnitte miteinander über zum Chassis quer verlaufende Profile verbunden sind.

13. Waggon nach Anspruch 12, dadurch gekennzeichnet, daß die Profile zur Verbindung der Abschnitte des Chassis untereinander Winkelprofile (17) sind.
